# EUROPÄISCHE PATENTSCHRIFT

(11) **EP 2 037 297 B1**
(45) Veröffentlichungstag und Bekanntmachung des Hinweises auf die Patenterteilung: **09.03.2011**
(21) Anmeldenummer: 08105053.6
(22) Anmeldetag: 15.08.2008
(51) Int. Cl.: G01V 8/20

(54) **Objekterfassung und Lichtgitter**
Object recognition and light grid
Détection d'objet et barrière lumineuse

(30) Priorität: 12.09.2007 DE 102007043557
(43) Veröffentlichungstag der Anmeldung: 18.03.2009
(73) Patentinhaber: SICK AG, 79183 Waldkirch (DE)
(72) Erfinder: Pirkl, Klaus, 64572, Büttelborn (DE); Grabinger, Jörg, 79312, Emmendingen (DE); Lehmann, Michael, 77971 Kippenheim (DE); Schleinkofer, Hannes, 79312, Emmendingen (DE); Brucker, Ralph, 77796 Mühlenbach (DE); Heinrichs, Yves, 79108 Freiburg (DE)
(74) Vertreter: Ludewigt, Christoph

(56) Entgegenhaltungen:
- EP-A- 1 353 196
- EP-A- 1 785 745
- DE-A1-102005 038 019

## Beschreibung

Die Erfindung betrifft ein Verfahren zur Erfassung von zwei oder mehr beweglichen Objekten in einem Überwachungsbereich nach dem Oberbegriff des Anspruchs 1 und ein Lichtgitter gemäß dem Oberbegriff des Anspruchs 9 zur Durchführung des Verfahrens.

Derartige Überwachungen unter Verwendung von Lichtgittern finden beispielsweise in hoch automatisierten Fertigungssystemen, beispielsweise im Automobilbau, Anwendung, bei denen Werkstücke automatisch zugeführt, bearbeitet und wieder abgeführt werden. Diese Fertigungssysteme bei derartigen Materialzuführstationen in Bearbeitungsstraßen sind in der Regel mit vollautomatischen Bearbeitungs-zentren (z. B. Robotereinrichtungen) und Transporteinrichtungen versehen. Da die Zuführ- und insbesondere die Bearbeitungsbereiche zugleich mögliche Gefahren-bereiche für Bedienungspersonal darstellen, ist es bei solchen Systemen erforder-lich, einen Schutz vor unzulässigem Eindringen vorzusehen. Ein solcher Schutz kann mittels Lichtgittern der eingangs erwähnten Art erreicht werden.

Der Begriff "Licht" ist generell nicht als Beschränkung auf sichtbares Licht zu verstehen. Vielmehr soll unter dem Begriff "Licht" allgemein jede Art von Licht und insbesondere jede Art von UV-Licht, IR-Licht und sichtbares Licht zu verstehen sein.

Die Zugangsbereiche bzw. Übergabestationen für Material zu gefährlichen Räumen, beispielsweise Roboterstationen oder Maschinen sind üblicherweise mittels sogenannter Mutingstationen überwacht. Dies können Lichtgitter sein, die grund-sätzlich den Zugang von Personal überwachen aber deaktiviert werden können (muting), wenn Material zugeführt wird. Eine solche ist beispielsweise in der
DE 201 03 828 U1 beschrieben. Diese bekannten Mutingstationen benötigen nachteiligerweise einen hohen Installationsaufwand und die Inbetriebnahme ist sehr aufwendig. Ein wesentlicher Nachteil ist, dass bei einer gültigen Mutingbedingung die Überwachungsfunktion vollständig überbrückt ist und somit die Überwachung des Zugangs während dieser Zeit ausgeschaltet ist. Konstruktiv sind Sender und Empfänger des Lichtgitters einer Mutingstation so anzubringen, dass keine Person während des Mutingvorgangs durch den Zwischenraum von Sensor und Muting-objekt in den Gefahrenbereich gelangen kann. Üblicherweise müssen diese Zwischenräume deshalb mit zusätzlichen Pendeltüren abgesichert werden.

Aus der DE 44 24 537 ist ein System bekannt, bei dem ein Lichtgitter ein Objekt als sogenanntes Floating Blanking Objekt im Schutzfeld erkennt und definiert Größe und Position des Objektes überwacht. In diesem System ist die Überwachung des Objekts begrenzt auf die Größe und evtl. die Position des Objekts. Es ist somit nicht möglich, dass sich beispielsweise zwei oder drei definierte Objekte mit definierter Größe und Abstand gleichzeitig im Lichtgitter aufhalten, ohne dass die Schaltausgänge abgeschaltet werden.

Aus der EP 1 353 196 B1 ist ein Verfahren zur Erfassung von zwei oder mehr beweglichen, zulässigen Objekten in einem Überwachungsbereich bekannt, wobei ein im Wesentlichen horizontales Lichtgitter (10) mit einer Mehrzahl von zueinander parallelen Lichtschranken verwendet wird, wobei die nachfolgenden drei Kriterien in Kombination überwacht werden:
- ein Eintrittsbereich für die Objekte
- Größe der Objekte
- Abstand bzw. Abstände zwischen den Objekten

Insgesamt besteht somit bei den bekannten Überwachungssystemen das Problem darin zu unterscheiden, ob sich im Überwachungsbereich zulässige Objekte (beispielsweise Maschinenelemente) oder unzulässige Objekte, nämlich beispielsweise die Beine eines Menschen, aufhalten.

Davon ausgehend liegt der Erfindung die Aufgabe zugrunde, ein verbessertes Verfahren zur Objekterfassung und ein entsprechendes verbessertes Lichtgitter der eingangs angegebenen Art zu schaffen, bei dem sich mehrere Objekte gleichzeitig durch den Überwachungsbereich bewegen können, ohne die Überwachungsfunktion zu deaktivieren.

Diese Aufgabe wird gelöst durch ein Verfahren mit den Merkmalen des Anspruchs 1 und ein Lichtgitter mit den Merkmalen des Anspruchs 7.

Die erfindungsgemäße Objekterfassung besitzt einen Auswertealgorithmus unter Verwendung von zunächst drei ersten Kriterien, welche entscheiden, ob sich ein zulässiges Objekt oder ein nicht zulässiges Objekt im Überwachungsbereich befindet. Um die Zulässigkeit des Objekts zu bejahen, muss auf jeden Fall der Eintrittsbereich aktiviert werden. Wird der Erstkontakt des Objekts mit dem Schutzfeld hinsichtlich des vorgegebenen Eintrittsbereichs abweichend aktiviert - wenn beispielsweise eine Person mit dem ersten Bein mitten in das Schutzfeld hineintritt, anstatt dass eine Stütze eines Materialtransportwagens seitlich einfährt - wird dies erkannt und die zu überwachende Maschine abgestellt. Dem Lichtgitter wird mit Hilfe eines Konfigurationstools somit - wie ausgeführt - zum einen der Eintrittsbereich für die Objekte konfiguriert sowie als weitere Kriterien die maximale Größe eines Objekts sowie der Abstand der Objekte. Das Lichtgitter überwacht ständig, ob die möglicherweise im Schutzfeld befindlichen Objekte als diejenigen Objekte identifiziert werden können, welche als gültig konfiguriert sind. Zusätzlich wird beim Erkennen eines neuen Objekts überprüft, ob der Eintritt des Objekts im Eintrittsbereich stattgefunden hat. Falls - wie ausgeführt - ein Objekt in einen anderen Bereich innerhalb des Schutzfeldes eintritt oder eine nicht erlaubte Größe hat oder ein nicht erlaubter Abstand zwischen mehreren Objekten vorliegt, führt dies zu einer sofortigen Abschaltung. Weiter werden die Kriterien überwacht, ob für jedes einzelne Objekt eine maximale und minimale Objektgröße vorliegt oder eine maximale Fördergeschwindigkeit unterschritten wird und eine vorgegebene Förderrichtung vorliegt. Bei Nichterfüllung lediglich eines dieser weiteren Kriterien wird das Steuersignal abgegeben.

Tritt beispielsweise eine Person in das Schutzfeld ein, wobei die Abmessungen des Querschnitts eines menschlichen Beines eine maximale Objektgröße überschreitet, wird das Steuersignal abgegeben. Werden andererseits Fördermittel oder Transportwagen verwendet, bei denen als zulässige Objekte sehr breite Bereiche, beispielsweise eine Breite von 400 mm eingelernt werden, so führt auch ein Eintritt einer Person zur Abschaltung mit einer Breite der Beine, die eine minimale Objektgröße, beispielsweise 300 mm, unterschreitet. Hierdurch ist gewährleistet, dass der Eintritt einer Person zusätzlich über die zu detektierende Objektgröße überwacht wird, wodurch eine Sicherheit eines solchen Verfahrens weiter erhöht wird.

Eine eintretende Person kann auch aufgrund einer überschreitenden Bewegungsgeschwindigkeit zur Fördergeschwindigkeit erkannt werden. Beträgt die Fördergeschwindigkeit beispielsweise 0,5 Meter pro Sekunde, wird eine Person, die mit einer Eintrittsgeschwindigkeit von einem Meter pro Sekunde in das Schutzfeld eintritt, sicher detektiert und es wird ein Steuersignal abgegeben.

Zusätzlich kann überwacht werden, ob der Transportwagen eine bestimmte Förderrichtung aufweist. Transportwagen und Personen, die eine entgegengesetzte Richtung als die eingestellte Förderrichtung aufweisen, werden sofort erkannt und es wird ein Steuersignal abgegeben. Mit diesen zusätzlichen Überwachungskriterien wird die Sicherheit eines solchen Verfahrens zur Erfassung von beweglichen zulässigen Objekten weiter signifikant erhöht.

In einer bevorzugten Ausführungsform wird das Lichtgitter in einer reduzierten Auflösung betrieben. Wird beispielsweise ein Transportwagen durch das Lichtgitter bewegt, dessen Streben unterschiedliche Größen mit einer gegebenen Toleranz aufweisen, ist es vorteilhaft möglich, das Lichtgitter mit der Einstellung der reduzierten Auflösung zu betreiben. Durch die reduzierte Auflösung werden die Streben mit einer bestimmten Toleranz als zulässige Objekte detektiert und der Transportwagen kann das Lichtgitter passieren. Tritt jedoch ein Objekt in das Lichtgitter ein, das eine vorgegebene Toleranzgröße überschreitet und die bereits beschriebenen Kriterien nicht erfüllt, so wird ein Steuersignal abgegeben. Durch die Einstellung und Auswertung der reduzierten Auflösung ist es möglich, Fertigungstoleranzen der Transportwagen auszugleichen und somit eine Verfügbarkeit einer Anlage mit dem erfindungsgemäßen Verfahren zu erhöhen.

In Weiterbildung der Erfindung wird als Kriterium eine Anzahl der Objekte überwacht. Weist ein Transportwagen beispielsweise drei Streben auf, dürfen nur maximal drei Streben eine Unterbrechung des Lichtgitters hervorrufen. Erfolgt eine weitere Unterbrechung des Lichtgitters beispielsweise durch eine eintretende Person, so wird unverzüglich ein Steuersignal abgegeben, da die Anzahl der erlaubten Objekte überschritten wurde. Umgekehrt ist es auch möglich, dass die Anzahl der zulässigen Objekte unterschritten wird. Dies ist beispielsweise der Fall, wenn eine Person in das Schutzfeld des Lichtgitters eintritt und durch die Beine nur zwei Unterbrechungen in dem Lichtgitter hervorruft. Kommt es nicht innerhalb einer bestimmten Zeit zu einer dritten erlaubten Unterbrechung, wie bei dem als zulässig eingestuften Transportwagen, so muss davon ausgegangen werden, dass es sich um ein anderes nichtzulässiges Objekt als den Transportwagen handelt. In diesem Fall wird auch unverzüglich ein Steuersignal abgegeben.

Vorzugsweise wird eine Unterbrechung eines einzelnen Lichtstrahls der Lichtschranken toleriert und kein Steuersignal abgegeben. Diese Maßnahme führt vorteilhaft dazu, dass die Verfügbarkeit einer solchen Anlage erheblich verbessert wird. Wird beispielsweise bei den Transportwagen durch herabhängende Befestigungsbänder eine Unterbrechung von einzelnen Lichtstrahlen des Lichtgitters ausgelöst, liegt zunächst keine Gefährdung von Personen vor, so dass kein Steuersignal abgegeben wird. Durch diese Maßnahme wird auch der Ausfall von einzelnen Lichtstrahlen aufgrund von Bauteildefekten zunächst toleriert, ohne dass eine Verfügbarkeit der Anlage auftritt. Ausgehend von weiteren defekten benachbarter Strahlen, welche zu einer signifikanten Einschränkung der Auflösung führen würden, wird ein Steuersignal abgegeben.

In einer weiteren bevorzugten Ausführungsform wird in dem Lichtgitter ein Bandstoppsignal verarbeitet und abhängig von dem Bandstoppsignal, bei Stillstand des Fördermittels und einer Veränderung der Objektposition ein Steuersignal abgegeben. Hierzu ist in dem Lichtgitter ein Eingang für das Bandstoppsignal vorgesehen. Wird beispielsweise das Transportband angehalten, so kann das Lichtgitter die Auswertung quasi 'einfrieren' und bei erneutem Anlauf des Transportbands ist die Bewegung des durchfahrenden Transportwagen weiter zu überprüfen. Dadurch ist gewährleistet, dass ein angehaltenes Transportband, beispielsweise zur Regulierung der Fördermenge oder bei einer Beseitigung von Störungen, nicht zur Beeinträchtigung der Lichtgitterfunktion und damit zu einer Verringerung der Verfügbarkeit führen würde. Wenn eine solche Transportanlage angehalten wird, können die angeordneten Lichtgitter eingeschaltet bleiben und ihren Betrieb nach Anlauf des Transportbandes wieder aufnehmen.

Vorzugsweise wird die Fördergeschwindigkeit durch Auswertung des Zeitpunkts nacheinander unterbrochener Lichtstrahlen des Lichtgitters erfasst. Dadurch dass die einzelnen Lichtschranken in dem Lichtgitter in gleichmäßigen Abständen angeordnet sind, kann eine Fördergeschwindigkeit aufgrund der zeitlich nacheinander erfolgten Abdeckung einzelner Lichtstrahlen und deren Auswertung sehr genau erfasst werden. Hierdurch sind keine zusätzlichen Sensoren zur Erfassung der Fördergeschwindigkeit notwendig. Eine betriebsgemäß eingelernte Fördergeschwindigkeit wird im laufenden Betrieb überwacht und eine Abweichung führt zum Ausgeben eines Steuersignals. Jedoch ist es auch möglich, unterschiedliche Fördergeschwindigkeiten in einem definierten Bereich zuzulassen und zusätzlich auftretende Objekte mit einer davon abweichenden Fördergeschwindigkeit führen zum Ausgeben eines Steuersignals.

In Weiterbildung der Erfindung wird die Fördergeschwindigkeit aufgrund eines Positionsgebersignals, insbesondere eines Inkrementalgebersignals oder eines Geschwindigkeitsgebersignals, erfasst. Vielfach ist ein Förderband bereits mit einem Inkrementalgeber oder einem Geschwindigkeitsgeber ausgestattet. Dieses Signal wird über einen Eingang direkt dem Lichtgitter eingegeben. Dadurch ist es möglich, bereits vorhandene Fördergeschwindigkeitssignale einfach zu verarbeiten und eine Überwachung der Transportgeschwindigkeit, wie bereits ausgeführt, vorzunehmen.

In einer weiteren bevorzugten Ausführungsform wird ein Steuersignal erzeugt, wenn sich die Objekte in Richtung einer Gefahrenstelle bewegen und kein Steuersignal erzeugt, wenn sich die Objekte von der Gefahrenstelle entfernen. Vielfach wird das zu verarbeitende Material über getrennte Transportwege zur Verarbeitung und somit zu der Gefahrstelle zugeführt und mit einem zweiten Transportband von der Gefahrstelle abtransportiert. Somit ist beim Abführen des bearbeitenden Materials nur eine einzige Förderrichtung, nämlich weg von der Gefahrenstelle, erlaubt. Treten Objektbewegungen in Richtung der Gefahrenstelle auf, so führt dies zum sofortigen absetzen eines Steuersignals, da es sich hierbei um ein nicht zulässiges Objekt handelt.

Im Folgenden wird die Erfindung anhand eines Ausführungsbeispiels unter Bezugnahme auf die Zeichnung im Einzelnen erläutert. In der Zeichnung zeigen:
- Fig. 1: ein erfindungsgemäßes Lichtgitter mit Schutzfeld in einer Einsatzsituation in der Draufsicht;
- Fig. 2 u. 3: jeweils eine schematische Darstellung eines Überwachungsbereichs in der Seitenansicht im Bereich eines Lichtgitters zur Erläuterung des erfindungsgemäßen Verfahrens.

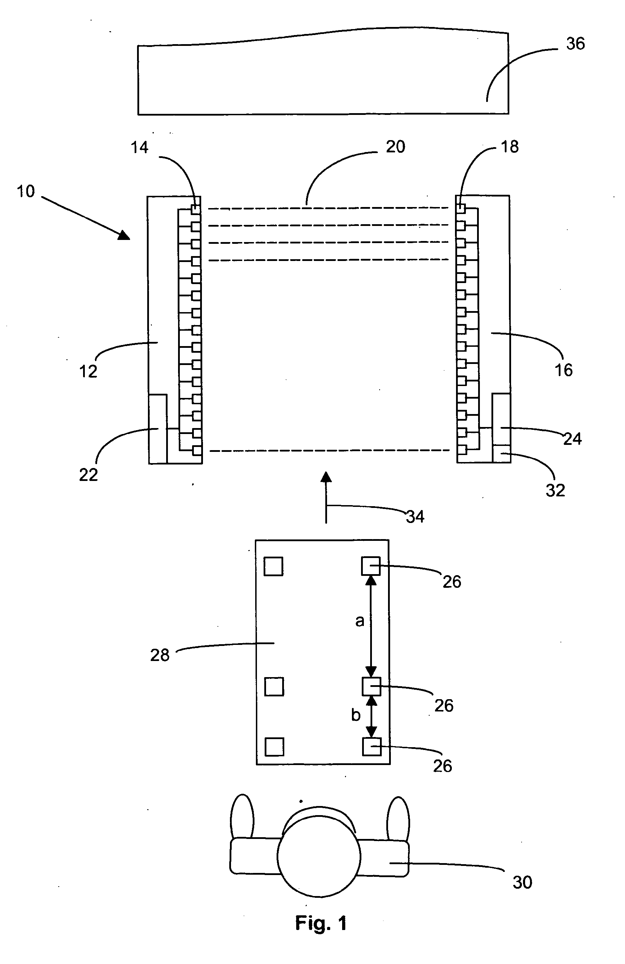

Ein erfindungsgemäßes Lichtgitter 10 gemäß Figur 1 weist eine Lichtsendeleiste 12 auf, die eine Reihe nebeneinander angeordneter Lichtsender 14 aufweist und eine Lichtempfangsleiste 16, die den Lichtsendern 14 entsprechende, ebenfalls nebeneinander angeordnete Lichtempfänger 18 aufweist. Jeweils gegenüberliegende Lichtsender 14 und Lichtempfänger 18 bilden in bekannter Weise eine Vielzahl zueinander paralleler Lichtschranken 20, deren Lichtstrahl in Fig. 1 durch gestrichelte Linien dargestellt ist. Das Lichtgitter 10 mit seinen Lichtschranken 20 definiert somit zwischen Sendeleiste 12 und Empfangsleiste 16 einen Über-wachungsbereich mit einem Schutzfeld. Das Lichtgitter 10 weist weiter wenigstens eine Steuer- und Auswerteeinheit 22, 24 auf. In dem dargestellten Ausführungs-beispiel ist sowohl in der Sende- 12 als auch in der Empfangsleiste 16 wenigstens je eine Steuer- und Auswerteeinheit 22, 24 vorgesehen. Die Steuer-und Auswerte-einheit 22 steuert die einzelnen Lichtsender 14 der Sendeleiste 12 und die Steuer- und Auswerteeinheit 24 der Empfangsleiste steuert die Lichtempfänger 18 und wertet deren Signale aus, so dass bei Unterbrechung einer oder mehrerer Lichtschranken 20 durch ein Objekt ein Warnsignal aus der Steuer-und Auswerteeinheit 24 ableitbar ist. Dieses Signal kann auch zum Abschalten einer gefährlichen Maschine 36 dienen.

Die grundsätzliche Funktionsweise eines solchen Lichtgitters ist z. B. in der DE 38 03 033 A1 beschrieben. Die einzelnen Lichtschranken 20 des Lichtgitters 10 werden zyklisch der Reihe nach aktiviert. Dabei werden die Lichtsender 14 und Lichtempfänger 18 auf optischem Wege über beispielsweise die erste und/oder letzte Lichtschranke 20 synchronisiert, so dass immer der dem momentan sendenden Lichtsender 14 gegenüberliegende Lichtempfänger 18 aktiviert ist. Insbesondere ist dadurch eine elektrische Verbindung zwischen der Sendeleiste 12 und der Empfangsleiste 16 nicht notwendig.

Die Steuer- und Auswerteeinheit 22, 24 ist so ausgelegt, dass nur dann das Unterbrechen einer Lichtschranke 20 zu einem Warnsignal führt, wenn eines der nachfolgenden Kriterien
- ein vorgegebener Eintrittsbereich für die Objekte
- eine vorgegebene Größe der Objekte
- ein vorgegebener Abstand bzw. Abstände zwischen den Objekten
nicht erfüllt ist. Zusätzlich wird noch überwacht, ob ein einzelnes Objekt eine maximale oder minimale Objektgröße über- bzw. unterschreitet oder eine Abweichung zu einer erwarteten Fördergeschwindigkeit vorliegt oder ob eine bestimmte Förderrichtung vorliegt.

Damit kann das Lichtgitter 10 unterscheiden, ob sich in dem Überwachungsbereich zulässige Objekte oder nicht zulässige Objekte aufhalten. Bei einem zulässigen Objekt kann es sich beispielsweise um drei Streben 26 einer Transporteinrichtung 28 handeln. Bei dem nicht zulässigen Objekt kann es sich um einen Menschen 30 handeln.

Das erfindungsgemäße Verfahren und die Funktionsweise des erfindungsgemäßen Lichtgitters lassen sich beispielsweise wie folgt beschreiben:

Zunächst müssen die vorgenannten wenigstens drei Kriterien (Eintrittsbereich, Größe der Objekte und Abstand bzw. Abstände zwischen den Objekten) und wenigstens eines der zusätzlichen Kriterien (jeweils maximale und minimale Objektgröße, Fördergeschwindigkeit oder Förderrichtung) in das Lichtgitter 10 eingegeben werden. Dies kann mit Hilfe von Konfigurationsmittel geschehen, die beispielsweise mit einem PC mit entsprechender Konfigurationssoftware verbunden werden. Besonders bevorzugt ist es aber, wenn das Lichtgitter 10 in einen Einlernmodus (auch teach-in Modus genannt) versetzt wird, indem es die genannten Kriterien bei Durchfahren des erlaubten Objekts, z. B. des Transportwagens 28, selbsttätig einlernt. Dazu weist die Steuer- und Auswerteeinheit 24 ein Umschaltmittel 32 auf, über das der Einlernmodus initiiert werden kann. Im Einlernmodus wird dann der Transportwagen 28 durch das Schutzfeld in Transportrichtung 34 mit der üblichen Fördergeschwindigkeit bewegt. Dabei werden der Eintrittsbereich, hier die in Fig. 1 unterste Lichtschranke, die maximale Größe der Streben 26 und die beiden Abstände a und b der Streben 26 eingelernt. Optional könnten noch die Anzahl der Streben oder die Reihenfolge der Streben, wenn sie unterscheidbar wären, eingelernt werden. Als weiteres Kriterium wird für jedes einzelne Objekt eine minimale Objektgröße oder eine maximale Fördergeschwindigkeit oder eine Förderrichtung überwacht.

Wenn im Normalbetrieb, also wenn das Lichtgitter 10 seine Schutzfunktion ausübt, eines der Kriterien nicht erfüllt ist, wenn beispielsweise ein Mensch 30 mit einem Bein mitten in das Schutzfeld tritt, der Eintrittsbereich, also die in Fig. 1 unterste Lichtschranke, aber nicht unterbrochen wird, wird das zugehörige Kriterium des vorgegebenen Eintrittsbereichs nicht erfüllt und das Warnsignal ausgegeben und/oder die gefährliche Maschine 36 oder Anlage abgeschaltet. Der Transportwagen 28 hingegen durchfährt mit seinen Streben 26 zunächst den Eintrittsbereich des Schutzfeldes, was erlaubt ist und nicht zu einem Warnsignal oder Abschaltung führt. Gleiches gilt für die weiteren Kriterien. So kann das Lichtgitter erkennen, dass sich die Dicke des Beines der Person 30 von dem Querschnitt der Streben 26 unterscheidet. Schließlich ist bei der Transporteinrichtung 28 der Abstand a bzw. b zwischen zwei Streben 26 immer konstant, während sich beim Gehen der Person 30 der Abstand zwischen den Beinen laufend verändert.

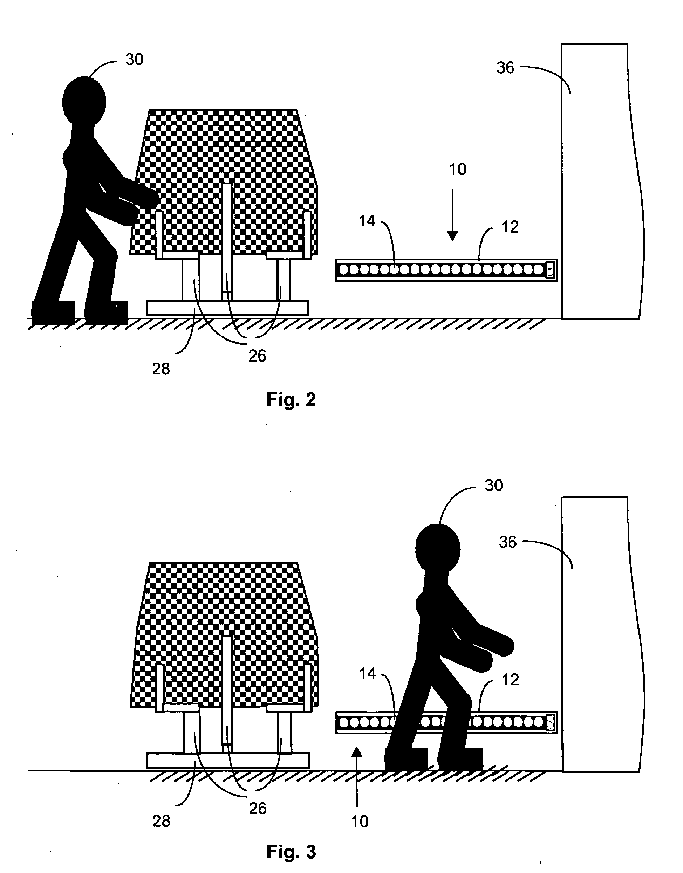

Bei der Verwendung von unterschiedlich breiten Streben 26 gemäß Figur 2 ist es vorgesehen, individuell eine maximale und minimale Objektgröße einzulernen. Figur 2 zeigt die Anordnung aus Figur 1 in der Seitenansicht, wobei die Streben 26 des Transportwagens unterschiedliche Breiten aufweisen. Diese eingelernten minimalen und maximalen Objektgrößen werden im Schutzbetrieb des Lichtgitters 10, einzeln für jede Strebe 26, überwacht. Tritt nun eine unterschiedliche Objektgröße, beispielsweise durch eine eintretende Person 30, wie in Figur 3 dargestellt auf, so führt dies unmittelbar zum Abgeben eines Steuersignals. Durch die Überwachung der Objektgröße jeder einzelnen Strebe 26 wird die Sicherheit weiter signifikant erhöht. Eine Manipulation des Lichtgitters 10 wird dadurch erheblich erschwert.

Um die Sicherheit weiter zu erhöhen ist es vorgesehen, eine maximale Fördergeschwindigkeit in dem Lichtgitter 10 zu hinterlegen. Die maximale Fördergeschwindigkeit wird während des Schutzbetriebs überwacht. Die maximale Förder-geschwindigkeit wird beispielsweise durch den Transportwagen 28 vorgegeben. Treten nun Unterbrechungen im Lichtgitter 10 auf, die diese maximale Förder-geschwindigkeit überschreiten, ist davon auszugehen, dass es sich dabei um unzulässige Objekte, beispielsweise um eintretende Personen 30, handelt. Auch hier wird unverzüglich ein Steuersignal abgeben.

Zusätzlich wird überprüft, ob eine bestimmte Förderrichtung vorliegt. Dies wird angewendet, wenn beispielsweise der Materialtransport zu einer arbeitenden Maschine jeweils getrennt zum Zuführen von Rohmaterial und zum Abführen des bearbeitenden Materials über jeweilige Fördereinrichtungen mit einer Förderrichtung durchgeführt wird. Das Lichtgitter 10 wird dabei so eingestellt, dass die Förder-richtung in dem Lichtgitter 10 durch das Unterbrechen der einzelnen Lichtschranken nacheinander überwacht wird. Treten nun Objektbewegungen entgegen dieser Förderrichtung auf, so werden die Objekte als unzulässig eingestuft und ein Steuersignal abgegeben.

In einer weiteren Ausführungsform wird das Lichtgitter 10 in einer reduzierten Auflösung betrieben. Werden Transportwagen verwendet, dessen Streben 26 eine höhere Toleranz aufweisen und damit die Breite der Streben 20 von Transportwagen zu Transportwagen in einem bestimmten Bereich variieren, könnten dadurch Fehlabschaltungen auftreten. Um dies zu vermeiden, wird das Lichtgitter 10 in der reduzierten Auflösung betrieben. Dies bedeutet, dass die eigentliche Auflösung des Lichtgitters 10 elektronisch verringert wird. Beispielsweise ist es möglich, ein Licht-gitter 10 mit einer optischen Auflösung von 20 mm in einer Auflösung von 30 mm zu betreiben, indem einzelne Lichtschranken nicht zur Auswertung herangezogen werden. Geringe Schwankungen der Abmessung der Streben 26 werden so durch das Lichtgitter 10 toleriert. Dadurch wird die Verfügbarkeit des Lichtgitters 10 in einer solchen Anwendung erheblich erhöht.

Zur Vermeidung von Fehlabschaltungen ist es weiter vorgesehen, dass eine Unterbrechung einzelner Lichtschranken des Lichtgitters 10 toleriert wird. Beispielsweise führen herabhängende Befestigungsbänder, die jeweils nur einen einzigen Lichtstrahl unterbrechen, nicht zum Abgeben eines Steuersignals und damit nicht zum Abschalten einer gefahrbringenden Bewegung. Durch diese Maßnahme wird die Verfügbarkeit des Lichtgitters 10 weiter maßgeblich erhöht.

Weiter ist es vorgesehen, ein Bandstoppsignaleingang am Lichtgitter vorzusehen. An diesem Eingang wird ein Ausgangssignal einer Transporteinrichtung, welches Aufschluss über die Transportbewegung oder -geschwindigkeit gibt, angeschlossen. Bei der Bewegung der Transporteinrichtung müssen sich auch die darauf befindlichen Objekte bewegen. Umgekehrt dürfen bei Stillstand der Transporteinrichtung auch die darauf befindlichen Objekte keine Förderbewegung aufweisen. Wird die Transporteinrichtung beispielsweise angehalten und eine Person bewegt sich auf der Transporteinrichtung durch das Lichtgitter, so wird allein aufgrund der auftretenden unzulässigen Bewegung der Personen ein Steuersignal abgegeben. Bei dem Bandstoppsignal kann es sich zunächst um ein binäres Signal handeln, das nur die Zustände 'Transporteinrichtung läuft' oder 'Transport-einrichtung läuft nicht', überträgt. Bei einem angelegten dynamischen Band-stoppsignal kann es sich insbesondere um ein Signal eines inkrementalen Gebers oder Position-/Geschwindigkeitsgeber handeln oder ein entsprechendes Signal wird von einer Steuerung bereitgestellt.

Weiter kann es vorgesehen sein, dass nur unzulässige Objekte, die sich in Richtung der Gefahrenstelle bewegen, zu einem Abschalten der gefahrbringenden Bewegung führen. Objekte, die sich jedoch von der Gefahrenstelle entfernen, obwohl die Förderichtung der Transporteinrichtung in Richtung der Gefahrenstelle eingestellt ist, führen nicht zwangsläufig zum Abgeben eines Steuersignals, da es sich hierbei nicht um eine gefährliche Situation handelt.

### Bezugszeichen:

- 10: Lichtgitter
- 12: Lichtsendeleiste
- 14: Lichtsender
- 16: Lichtempfangsleiste
- 18: Lichtempfänger
- 20: Lichtschranken
- 22,24: Steuer- und Auswerteeinheit
- 26: Streben
- 28: Transportwagen
- 30: Person
- 32: Umschaltmittel
- 34: Transportrichtung
- 36: Maschine

## Patentansprüche

1. Verfahren zur Erfassung von zwei oder mehr beweglichen, zulässigen Objekten in einem Überwachungsbereich, wobei ein im Wesentlichen horizontales Lichtgitter (10) mit einer Mehrzahl von zueinander parallelen Lichtschranken (20) verwendet wird, wobei die nachfolgenden Kriterien in Kombination überwacht werden:
a) ein Eintrittsbereich für die Objekte und
b) eine Größe der Objekte und
c) ein Abstand bzw. Abstände zwischen den Objekten,
**dadurch gekennzeichnet, dass**
d) eine bestimmte Förderrichtung vorliegt und
e) jeweils für jedes einzelne Objekt eine maximale und minimale Objektgröße oder eine maximale Fördergeschwindigkeit nicht überschritten wird
und bei Nichterfüllung wenigstens eines dieser Kriterien a) bis e) ein Steuersignal abgegeben wird,
wobei jedoch kein Steuersignal erzeugt wird, wenn sich die Objekte von der Gefahrenstelle entfernen und
eine Unterbrechung einzelner Lichtstrahlen der Lichtschranken (20) toleriert wird, so dass, kein Steuersignal abgegeben wird.

2. Verfahren nach Anspruch 1, **dadurch gekennzeichnet, dass** das Lichtgitter (10) in einer reduzierten Auflösung betrieben wird.

3. Verfahren nach einem der vorhergehenden Ansprüche, **dadurch gekennzeichnet, dass** als Kriterium eine Anzahl der Objekte überwacht wird.

4. Verfahren nach einem der vorhergehenden Ansprüche, **dadurch gekennzeichnet, dass** in dem Lichtgitter (10) ein Bandstoppsignal verarbeitet wird und abhängig von dem Bandstoppsignal, bei Stillstand des Förder-mittels und einer Veränderung der Objektposition ein Steuersignal abgegeben wird.

5. Verfahren nach einem der vorhergehenden Ansprüche, **dadurch gekennzeichnet, dass** die Fördergeschwindigkeit durch Auswertung des Zeitpunktes nacheinander unterbrochener Lichtstrahlen des Lichtgitters (10) erfasst wird.

6. Verfahren nach einem der vorhergehenden Ansprüche, **dadurch gekennzeichnet, dass** die Fördergeschwindigkeit aufgrund eines Positionsgebersignals, insbesondere eines Inkrementalgebersignals oder eines Geschwindigkeitsgebersignals, erfasst wird.

7. Lichtgitter, insbesondere zur Durchführung eines Verfahrens nach einem der vorhergehenden Ansprüche, mit einer Lichtsendeleiste (12), die eine Reihe nebeneinander angeordneter Lichtsender (14) aufweist und einer Lichtempfangsleiste (16), die den Lichtsendern (14) entsprechende ebenfalls nebeneinander angeordnete Lichtempfänger (18) aufweist, so dass eine Vielzahl zueinander paralleler Lichtschranken (20) gebildet sind, die einen sich im Wesentlichen horizontal erstreckenden Überwachungsbereich definieren, mit wenigstens einer Steuer- und Auswerteeinheit (22, 24), die die einzelnen Lichtschranken steuert und auswertet, so dass bei Unterbrechung einer oder mehrerer Lichtschranken (20) durch ein nicht zulässiges Objekt ein Steuersignal ableitbar ist und die Steuer- und Auswerteeinheit (22, 24) Mittel aufweist, zum Erkennen zwei oder mehrerer zulässiger Objekte, wobei die Objekte, dann zulässig sind, wenn die nachfolgenden Kriterien erfüllt sind:
a) ein vorgegebener Eintrittsbereich für die Objekte und
b) eine vorgegebene Größe der Objekte und
c) ein vorgegebener Abstand bzw. Abstände zwischen den Objekten **dadurch gekennzeichnet, dass**
d) eine vorgegebene Förderrichtung vorliegt und
e) für jedes einzelne Objekt eine vorgegebene maximale und minimale Objektgröße oder eine vorgegebene zulässige maximale Fördergeschwindigkeit vorliegt,
wobei jedoch kein Steuersignal erzeugbar ist, wenn sich die Objekte von der Gefahrenstelle entfernen und
eine Unterbrechun einzelner Lichtstrahlen der Lichtschranken (20) tolerierbar ist, so dass, kein Steuersignal abgegeben wird.

8. Lichtgitter nach Anspruch 7, **dadurch gekennzeichnet, dass** das Lichtgitter eine reduzierte Auflösung aufweist.

9. Lichtgitter nach einem der vorhergehenden Ansprüche 7 bis 8, **dadurch gekennzeichnet, dass** als Kriterium eine Anzahl der Objekte erfüllt ist.

10. Lichtgitter nach einem der vorhergehenden Ansprüche 7 bis 9, **dadurch gekennzeichnet, dass** ein Eingang für ein Bandstoppsignal vorgesehen ist und abhängig von dem Bandstoppsignal, bei Stillstand des Fördermittels und einer Veränderung der Objektposition ein Steuersignal abgegeben wird.

11. Lichtgitter nach einem der vorhergehenden Ansprüche 7 bis 10, **dadurch gekennzeichnet, dass** Mittel zur Auswertung der Fördergeschwindigkeit vorhanden sind, durch Auswertung des Zeitpunktes nacheinander unterbrochener Lichtstrahlen des Lichtgitters (10).

12. Lichtgitter nach einem der vorhergehenden Ansprüche 7 bis 11, **dadurch gekennzeichnet, dass** ein Eingang oder eine Schnittstelle zum Einlesen der Fördergeschwindigkeit vorhanden ist.

13. Lichtgitter nach einem der vorhergehenden Ansprüche 7 bis 12, **dadurch gekennzeichnet, dass** zur Ermittlung der Fördergeschwindigkeit ein Positionsgeber, insbesondere ein Inkrementalgeber oder ein Geschwindigkeitsgeber, vorhanden ist.

## Claims

1. A method for the detection of two or more movable allowed objects in a monitoring zone, wherein a substantially horizontal light grid (10) having a plurality of light barriers (20) parallel to one another is used, wherein the following criteria have to be monitored in combination:
a) an entry region for the objects and
b) a size of the objects and
c) a separation or separations between the objects, **characterized in that**
d) a certain conveying direction is present and
e) respectively for each individual object a maximum object size and a minimum object size or a maximum conveying speed are not exceeded
and, if at least one of these criteria a) to e) is not satisfied, a control signal is emitted,
wherein, however, no control signal is generated when the objects move away from the danger zone and
an interruption of individual light beams of the light barriers (20) is tolerated, so that no control signal is emitted.

2. A method in accordance with claim 1 **characterized in that** the light grid (10) is operated at a reduced resolution.

3. A method in accordance with any one of the preceding claims **characterized in that** a number of the objects are monitored as a criterion.

4. A method in accordance with any one of the preceding claims **characterized in that** a band stop signal is processed in the light grid (10) and depending on the band stop signal, a control signal is emitted on standstill of the conveying mean and a change of the object position.

5. A method in accordance with any one of the preceding claims **characterized in that** the conveying speed is detected by means of the evaluation of the point in time of subsequently interrupted light beams of the light grid (10).

6. A method in accordance with any one of the preceding claims **characterized in that** the conveying speed is detected due to a position transmitter signal, in particular is detected by an incremental transmitter signal or by a speed transmitter signal.

7. A light grid, in particular for carrying out a method in accordance with any one of the preceding claims, having a light emitting strip (12) which has a series of light emitters (14) arranged adjacent to one another and a light receiving strip (16) having light receivers (18) arranged adjacent to one another in a manner corresponding to the light emitters (14), so that a plurality of light barriers (20) parallel to one another are formed, which define a monitoring zone which extends substantially horizontally and having at least a control and evaluation unit (22, 24) which controls the individual light barriers and evaluates these, so that on interruption of one or more light barriers (20) by a non-allowed object a control signal can be derived and the control and evaluation unit (22, 24) has means for the recognition of two or more allowed objects, wherein the objects are allowed then when the following criteria are satisfied:
a) a predefined entry region for the objects and
b) a predefined size of the objects and
c) a predefined distance or distances between the objects and **characterized in that**
d) a predefined conveying direction is present and
e) for each individual object a predefined maximum object size and minimum object size or a predefined allowed maximum conveying speed is present,
wherein, however, no control signal can be generated when the objects move away from the danger zone and
an interruption of individual light beams of the light barrier (20) can be tolerated, so that no control signal is emitted.

8. A light grid in accordance with claim 7 **characterized in that** the light grid has a reduced resolution.

9. A light grid in accordance with any one of the preceding claims 7 to 8 **characterized in that** as a criteria a number of objects is satisfied.

10. A light grid in accordance with any one of the preceding claims 7 to 9 **characterized in that** an input for a band stop signal is provided and, dependent on the band stop signal, a control signal is emitted on standstill of the conveying meanings and on a change of the object position.

11. A light grid in accordance with any one of the preceding claims 7 to 10 **characterized in that** means for the evaluation of the conveying speed are present by means of evaluation of the point in time of sequentially interrupted light beam is the light grid (10).

12. A light grid in accordance with any one of the preceding claims 7 to 11 **characterized in that** an input or an interface for reading in the conveying speed is present.

13. A light grid in accordance with any one of the preceding claims 7 to 12 **characterized in that** for the detection of the conveying speed a position transmitter is present, in particular an incremental transmitter or a speed transmitter is present.

## Revendications

1. Procédé pour la détection de deux ou plusieurs objets mobiles admissibles dans une zone de surveillance, dans lequel on utilise une grille lumineuse sensiblement horizontale (10) avec une pluralité de barrières lumineuses (20) parallèles les unes aux autres, et dans lequel on surveille en combinaison les critères suivants :
a) une zone d'entrée pour les objets et
b) une taille des objets et
c) une distance ou des distances entre les objets,
**caractérisé en ce que**
d) il existe une direction de convoyage déterminée et
e) pour chaque objet individuel, une taille d'objet maximale et minimale ou une vitesse de convoyage maximale n'est pas dépassée,
et si l'un au moins de ces critères a) à e) n'est pas satisfait, on délivre un signal de commande,
mais cependant aucun signal de commande n'est généré si les objets s'éloignent de l'emplacement dangereux et
une interruption de rayons lumineux individuels des barrières lumineuses (20) est tolérée, de sorte qu'aucun signal de commande n'est délivré.

2. Procédé selon la revendication 1, **caractérisé en ce que** la grille lumineuse (10) fonctionne dans une résolution réduite.

3. Procédé selon l'une des revendications précédentes, **caractérisé en ce que** l'on surveille un nombre des objets à titre de critère.

4. Procédé selon l'une des revendications précédentes, **caractérisé en ce que** l'on traite un signal d'arrêt de bande dans la grille lumineuse (10) et, en cas d'arrêt des moyens de convoyage et de modification de la position des objets, en fonction du signal d'arrêt de bande, on délivre un signal de commande.

5. Procédé selon l'une des revendications précédentes, **caractérisé en ce que** la vitesse de convoyage est détectée par évaluation de l'instant auquel des rayons lumineux de la grille lumineuse (10) sont interrompus les uns après les autres.

6. Procédé selon l'une des revendications précédentes, **caractérisé en ce que** la vitesse de convoyage est détectée en se basant sur un signal d'un détecteur de position, en particulier d'un signal d'un capteur incrémental ou d'un signal de capteur de vitesse.

7. Grille lumineuse, en particulier pour la mise en oeuvre d'un procédé selon l'une des revendications précédentes, comprenant une barrette émettrice de lumière (12), qui comprend une rangée d'émetteurs de lumière (14) agencés les uns à côté des autres, et une barrette réceptrice de lumière, qui comprend des récepteurs de lumière (18) agencés également les uns à côté des autres et correspondants aux émetteurs de lumière (14), de sorte qu'il se forme une pluralité de barrières lumineuses (20) parallèles les unes aux autres, qui définissent une zone de surveillance s'étendant sensiblement horizontalement, comprenant au moins une unité de commande et d'évaluation (22, 24) qui commande et évalue les barrières lumineuses individuelles de telle façon que lors d'une interruption d'une ou plusieurs barrières lumineuses (20) par un objet non admissible un signal de commande peut être engendré et l'unité de commande et d'évaluation (22, 24) comprend des moyens pour reconnaître deux ou plusieurs objets admissibles, et les objets sont admissibles quand les critères suivants sont satisfaits :
a) une zone d'entrée prédéterminée pour les objets et
b) une taille prédéterminée des objets et
c) une distance ou des distances prédéterminée(s) entre les objets, **caractérisée en ce que**
d) il existe une direction de convoyage prédéterminée et
e) pour chaque objet individuel il existe une taille d'objet maximale et minimale ou une vitesse de convoyage maximale admissible prédéterminée,
mais cependant aucun signal de commande ne peut être engendré si les objets s'éloignent de l'emplacement dangereux et
une interruption de rayons lumineux individuels des barrières lumineuses (20) est susceptible d'être tolérée, de sorte qu'aucun signal de commande n'est délivré.

8. Grille lumineuse selon la revendication 7, **caractérisée en ce que** la grille lumineuse présente une résolution réduite.

9. Grille lumineuse selon l'une des revendications 7 et 8, **caractérisée en ce qu'**un nombre d'objets constitue un critère.

10. Grille lumineuse selon l'une des revendications 7 à 9, **caractérisée en ce qu'**il est prévu une entrée pour un signal d'arrêt de bande et, en cas d'arrêt du moyen de convoyage et d'une modification de la position des objets, un signal de commande est délivré en fonction du signal d'arrêt de bande.

11. Grille lumineuse selon l'une des revendications 7 à 10, **caractérisée en ce qu'**il est prévu des moyens pour évaluer la vitesse de convoyage, par évaluation de l'instant auquel des rayons lumineux de la grille lumineuse (10) sont interrompus les uns après les autres.

12. Grille lumineuse selon l'une des revendications 7 à 11, **caractérisée en ce qu'**il est prévu une entrée ou une interface pour la lecture de la vitesse de convoyage.

13. Grille lumineuse selon l'une des revendications 7 à 12, **caractérisée en ce qu'**il est prévu un capteur de position, pour déterminer la vitesse de convoyage, en particulier un capteur incrémental ou un capteur de vitesse.
